(19) **Europäisches Patentamt / European Patent Office / Office européen des brevets**

(11) **EP 2 091 196 B1**

(12) **EUROPEAN PATENT SPECIFICATION**

(45) Date of publication and mention
of the grant of the patent:
**01.01.2014 Bulletin 2014/01**

(51) Int Cl.:
*H04L 1/00* (2006.01)  *H04L 1/20* (2006.01)
*H04L 25/02* (2006.01)  *H04L 25/03* (2006.01)
*H04L 5/20* (2006.01)  *H04L 27/26* (2006.01)
*H04L 5/00* (2006.01)

(21) Application number: **08290136.4**

(22) Date of filing: **13.02.2008**

(54) **Method and apparatus for DSL comunication**

Verfahren und Vorrichtung für DSL-Kommunikation

Procédé et appareil pour la communication DSL

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**19.08.2009 Bulletin 2009/34**

(73) Proprietor: **Alcatel Lucent**
**75007 Paris (FR)**

(72) Inventors:
• **Maes Jochen**
**2431 Veerle (BE)**
• **Peeters Michael**
**2547 Lint (BE)**
• **Gueanch Mamoun**
**1830 Machelen (BE)**
• **Le Nir Vincent**
**3000 Leuven (BE)**
• **Moonen Marc**
**3020 Herentwinksele (BE)**

(74) Representative: **ALU Antw Patent Attorneys**
**Copernicuslaan 50**
**2018 Antwerpen (BE)**

(56) References cited:
**WO-A-2006/120510**

• GINIS G ET AL: "Vectored-DMT: a FEXT canceling modulation scheme for coordinating users" ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 1, 11 June 2001 (2001-06-11), pages 305-309, XP010553013 ISBN: 978-0-7803-7097-5
• JUNGWON LEE ET AL: "Multi-user discrete bit-loading for DMT-based DSL systems" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002; [IEEE GLOBAL TELECOMMUNICATIONS CONFERENCE], NEW YORK, NY : IEEE, US, vol. 2, 17 November 2002 (2002-11-17), pages 1259-1263, XP010636347 ISBN: 978-0-7803-7632-8

## Description

### Field of the Invention

The present invention generally relates to the field of data transmission technology and more in particular to transmitters and receivers for communication over digital subscriber lines. The invention also relates to a method of communicating with such systems.

### Background of the Invention

Next generation services require higher broadband throughput than typically available from exchange or remote node based digital subscriber lines (DSL). There is thus a great interest in increasing the capacity of copper pair binders. Binders comprise many individual pairs of telephone cables

The limiting factor in xDSL communications is crosstalk interference coming from other lines in the same binder which degrades the received signal. By applying advanced signal processing techniques the impairment due to crosstalk can be considerably reduced. A known way to achieve a significant throughput enhancement consists in applying Dynamic Spectrum Management (DSM). The DSM approach compensates for DSL performance impairments introduced by crosstalk. Management of power levels and spectral usage (DSM levels 0, 1 and 2) aims to improve the performance of the poorest lines while minimizing the impact upon other lines. DSM level 3 goes one step further to process the transmitted signals in such a way that the crosstalk is effectively cancelled, boosting throughput for all lines. In order to achieve the significant benefits offered by DSM, all lines that interact with each other need to be coordinated. To effectively deploy and benefit from the advanced DSM level 3 techniques, an entire cable binder needs to be controlled from the same line-card / DSL Access Multiplexer (DSLAM). Most benefits of DSM are not accessible unless all lines in a cable are controlled by a single device or when several devices have a high level of coordination and communication. Having multiple uncoordinated devices feeding the same cable binder is incompatible with DSM level 3 techniques because it eliminates the passibility of managing the medium to the degree required to successfully benefit from DSM3.

As already mentioned, mitigating the self-crosstalk by taking actions at the transmitter and the receiver can improve the SNR and thus increase the achieved throughput. In both cases some analogue or digital signal processing is required, which is called vectoring. This vectoring compensates the self-crosstalk present, while transmitting at full power. Whereas DSM levels 1 and 2 reallocate spectra, reduce or maintain the overall power levels and come at marginal cost, DSM level 3 requires an increased processing power.

In the upstream direction (from the customer premises towards the central office side), the interference cancellation is performed over a set of strong interferers and no feedback is required from the customer premises equipment (CPE): the DSLAM cancels the crosstalk on each line by joint decoding of the data arriving on each of the lines. This cancellation requires an estimate of the crosstalk channel. Methods for estimating crosstalk are known in the art, e.g. from patent application EP 1630968.

In the downstream direction (i.e. towards the CPE), assuming that the characteristics of the crosstalk channels have been well estimated, one can predict and therefore pre-compensate the crosstalk of each line. This is called pre-coding, and can be implemented by means of a per-tone matrix multiplication in the case of digital multi-tone systems such as VDSL2. However some feedback from the CPE is needed to estimate the crosstalk channel and therefore results in a dependence on deployment of CPE that implements the required functionality.

In order to increase the achievable data rates for DSL services, multi-line ADSL modulation was presented in patent document US6507608. It describes the use of so called phantom modes for transmission or reception of data signals. The term phantom mode' hereby refers to the following. A central office provides ADSL service to a home over a first and a second twisted pair, as well as over a virtual ('phantom') channel defined by the difference in average voltage (i.e. the difference in common mode voltage) between the first and the second twisted pairs. The CPE at the home is coupled to the first and second twisted pair by a first and second transformer, respectively. A third transformer is coupled to the center tape of the windings of the first and second transformer to create said virtual or phantom channel. The first and second twisted pairs may be used for downstream communication, while upstream communications are transmitted via the phantom or virtual line. Alternatively, all three available channels can be used in frequency-division-duplexing mode (i.e. both for up- and downstream).

Also in patent application US2006/268966 A1 the use of a phantom mode channel together with the normal differential channels is disclosed, In this application the phantom mode is defined as being the differential mode between the twisted pair and a common ground. However, providing such phantom channel derived from a common ground is known to cause a large amount of egress noise and to be highly susceptible to ingress, unless the twisted pairs chosen for such phantom mode are twisted together.

In addition, WO 2006/120510 A1 discloses applying in a processing techniques to phantom channels.

Consequently, it is an object of the present invention to provide a DSL communication method and apparatus capable of providing increased capacity by exploiting the presence of a phantom channel.

## Summary of the Invention

The present invention is defined by the appended claims.

## Brief Description of the Drawings

Fig. 1 illustrates a configuration comprising a phantom mode channel.
Fig. 2 illustrates an example of the attenuation of a direct differential mode (DM) channel and of the crosstalk channel introduced from a phantom mode channel into the DM mode.
Fig. 3 illustrates the bit loading on the differential modes in the downstream in case of (a) phantom mode transmission and (b) no phantom mode transmission.
Fig. 4 illustrates the bit loading on the differential modes in the upstream in case of (a) phantom mode transmission and (b) no phantom mode transmission.

## Detailed Description

In the present invention a phantom channel is applied defined by the difference in common mode voltage between a first and a second twisted pair. In other words, the same definition of phantom channel as in the above-mentioned US6507608 is used.

The invention can be applied wherever two pairs of copper wires are available. Most typically, this occurs at the central office (CO) side, where a plurality of copper lines is terminated in an access node, typically a DSL access multiplexer (DSLAM). Therefore, in the DSLAM the phantom mode can be exploited to transmit (in downstream) and receive (in upstream) on it.

However, in case a customer can avail himself of two copper pairs, both the customer premises equipment (CPE) and the CO can use the phantom mode as an additional pair for transmission and reception. When a customer only has one twisted pair available or there are no two collocated CPEs, which is often the case, the customer has no access to the phantom mode for reception or transmission of data signals.

Quads are four-wire units, i.e. units consisting of four pairs of twisted copper wires. The rest of this description explains the invention with reference to quads (as an example).

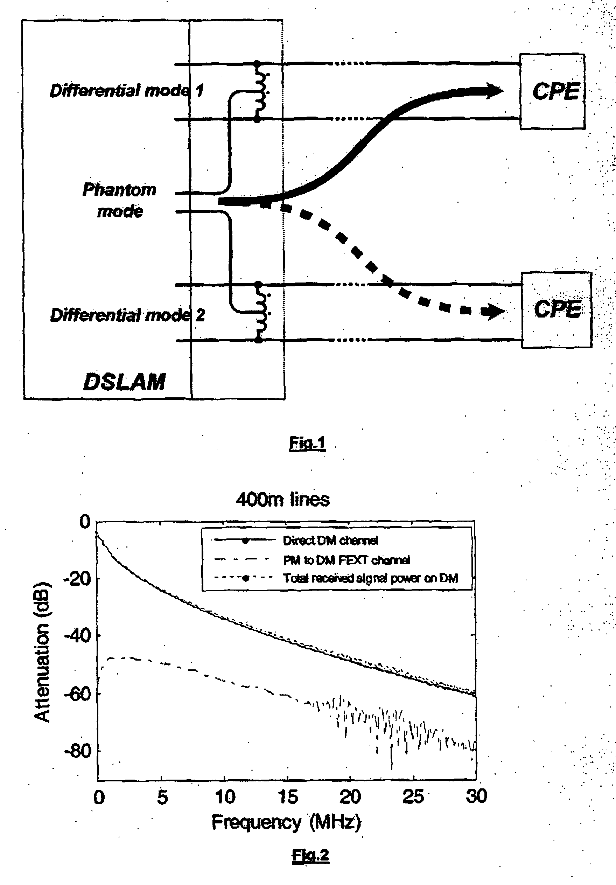

Fig. 1 shows a possible configuration for generating a phantom mode. Apart from a DSL transceiver it comprises two transformers for creating the phantom mode. Alternatively, the differential and phantom mode signal may be derived from a configuration without transformers. The differential signals can then be derived similarly to the way a differential signal is obtained in an instrumentation amplifier. By placing the centre taps of the two differential modes of a quad on a line card with proper impedance matching, the phantom mode between the two differential modes can be used for either transmission or reception of signals.

The present invention proposes to apply one-sided coordination algorithms in order to boost the bit rate over the quad cable. With 'one-sided coordination algorithms' is meant algorithms that are applied to a set of lines (in this example two differential modes and one phantom mode) on one side of the channel only (most often the DSLAM side). The three lines can be 'coordinated' as full access to the lines is available at one side. Coordination means that the three lines can be simultaneously controlled by a single algorithm. The algorithm controls for example the power spectral density (PSD) levels (including power allocation) and/or joint coding (including pro-coding, i.e. coding applied to reduce self-crosstalk effects). At the CPE side, coordination is usually not present, because each CPE acts (encodes/decodes) independently of the other CPEs. However, as already mentioned, exceptions to this rule are possible.

In the downstream direction a signal is placed on the phantom mode that contains the difference between two wire pairs of their common mode voltages. Using joint coding and optionally optimal power allocation on the two differential modes and the phantom mode as described more in detail below, the signals can be chosen such that they increase the downstream SNR for both pairs in the quad. For this, the crosstalk channels from the phantom mode into the differential modes need to be measured, e.g. by the SNR method.

Phantom mode transmission over a quad does not show more egress than the usual differential mode transmission. The crosstalk into differential modes (DM) outside the quad is of the same magnitude as DM-DM crosstalk. The crosstalk from a phantom mode into a DM of the quad is about 20 dB higher than differential mode to differential mode crosstalk.

Fig.2 shows the channel characteristics of a direct differential mode (DM) channel and of a far-end crosstalk channel between the phantom mode (PM) and the differential mode in the example of a 400m DSL line. The total received power on the DM is slightly larger than in a case without phantom mode, as illustrated also in Fig.2. By coordinated transmission and/or reception, this slight difference allows loading additional bits on some of the frequency tones. Especially in a VDSL scenario, where a large number of high-frequency tones is applied, this gives rise to a substantial additional gain in bit rate as compared to a scenario without phantom mode.

The present invention thus exploits the phantom mode into differential mode crosstalk channel. One can, for instance, place the signal of the differential mode also onto the phantom mode. However, since the phase rotation of the phantom mode in general is different from that of the differential mode, it is likely that the direct signal on the differential mode and the crosstalk signal from the phantom mode into the differential mode interfere negatively at the receiver, resulting in a net decrease of the SNR. Therefore, the signal placed on the phantom mode needs to be carefully rotated in the frequency domain in order to achieve positive interference. The amount of phase rotation to be applied as a function of frequency can be measured accurately using for instance SNR measurements. This method is similar to those used in DSM level-3 techniques.

Various coordination algorithms can be envisaged for implementing the present invention.

In one embodiment for downstream communication an encoding scheme can be applied in the transmitter wherein the signal placed onto the phantom mode is a rotated version of the signal placed on the first differential mode. The full transmit PSD of the phantom mode is thus used to increase the SNR of only one of the differential modes. In this case, the second differential mode remains uncoordinated, while the first differential mode and the phantom mode are coordinated at the transmit side. When the signal transmitted on differential mode i is denoted $x_i$, the received signal on differential mode i $y_i$, $H_{ll}$ represents the direct channel transfer function, $n_l$ the background noise on line i and $P_i$ the transmit power, the situation without use of phantom mode is given by:

$$y_1 = P_1^{1/2}H_{11}x_1 + P_2^{1/2}H_{12}x_2 + \sigma_{n1}$$

$$SNR_1 = P_1|H_{11}|^2/(P_2|H_{12}|^2 + \sigma_{n1}^2)$$

whereby $SNR_l$ denotes the signal-to-noise ratio on line i and $H_{ij}$ the (crosstalk) channel from line j into line i.

If the phantom mode is used to boost line 1, then the signal transmitted on the phantom mode is $A^{1/2}e^{(l\,phi)}x_1$ where *phi* denotes the phase difference between the direct channel of the first differential mode and the crosstalk from the phantom mode into the differential mode and A reflects the power allocation ($0 \leq A \leq 1$; A can be chosen 1 in this example).

$$y_1 = P_1^{1/2}H_{11}x_1 + (AP_{PM})^{1/2}H_{1PM}e^{l\,phi}x_1 + P_2^{1/2}H_{12}x_2 + \sigma_{n1}$$

The phase *phi* is chosen

$$Phi = -arg(H_{1PM}/H_{11})$$

such that

$$|P_1^{1/2}H_{11} + (AP_{PM})^{1/2}H_{1PM}e^{l\,phi}| = |P_1^{1/2}H_{11}| + |(AP_{PM})^{1/2}H_{1PM}|.$$

Therefore,

$$SNR_1 = \sigma^2 (P_1|H_{11}| + (AP_{PM})|H_{1PM}|)^2 /(P_2|H_{12}|^2 + \sigma_{n1}^2)$$

Many alternative coordination schemes are available as described below. Similar mathematical formulas as above can be derived for each of these cases, as the skilled person will readily appreciate.

Alternatively one applies pre-coding in order to reduce the crosstalk from the phantom mode and the first differential mode into the second differential mode and vice versa, in which case the three channels are coordinated.

Another option is to split the power available to the phantom mode between the two differential modes, whereby half of the power is allocated to aid the first differential mode and half of the power is allocated to the second differential mode. The two signals are in general rotated with different phases.

As a further example, one can split the power available to the phantom mode based on the service profile of the end customer, where a larger fraction of the power is allocated to the high-end customer.

Alternatively, one can split the power available to the phantom mode based on the loop characteristics, whereby a larger fraction of the power is allocated to that differential mode that displays the strongest attenuation (or that has the longest loop length).

Yet another alternative is to split the power available to the phantom mode based on the crosstalk amplitude of the phantom mode into the differential modes, where frequency tones that show a higher crosstalk into the first differential mode are allocated to the first differential mode, and tones that show a higher crosstalk into the second differential mode are allocated to the second differential mode.

One can also split the power available to the phantom mode based on the technology type. For example, when the two differential modes use different xDSL technologies or different VDSL2 band profiles, the tones that are used by only one of the lines are entirely allocated to the PM to assist the rate-boost DM of that line, while the tones used by both lines are shared in the PM line transmission according to one of the above criteria.

More complex algorithms can be used as well, an example of which is described now. For a description with more mathematical detail, reference is made to the paper 'Broadcast Channel Optimal Spectrum Balancing (BC-OSB) with per-modem total power constraints for downstream DSL', (V. Le Nir et al., presented at EUSIPCO-07, Sept. 3-7, 2007, Poznan, Poland). The described algorithm forms the basis for an adaptation in the present invention for use in a scheme having a phantom channel. The paper explains amongst other things how to find optimal transmit vector covariahce matrices for a broadcast channel (i.e. in downstream communication) under per-modem total power constraints, i.e. for each modem over all frequency tones. The proposed solution exploits the broadcast channel (BC) - multiple access channel duality to determine a BC power allocation. The proposed solution leads to an optimal use of the available transmit power by an optimal distributions over the various frequency tones. Whereas the above described algorithms mainly aim at an optimal distribution of the power over the various communication channels, this more advanced algorithm deals with an optimisation of the power available to one user over the considered frequency band. The algorithm described in the above-mentioned paper can readily be adapted for use in a scenario additionally comprising a phantom mode channel.

Alternatively, the phantom mode decoding is (also) used as a means to reduce the alien crosstalk by correlating the noise measured on the phantom mode with the noise measured on the differential mode(s). In this case, exploiting the phantom mode will decrease the noise level.

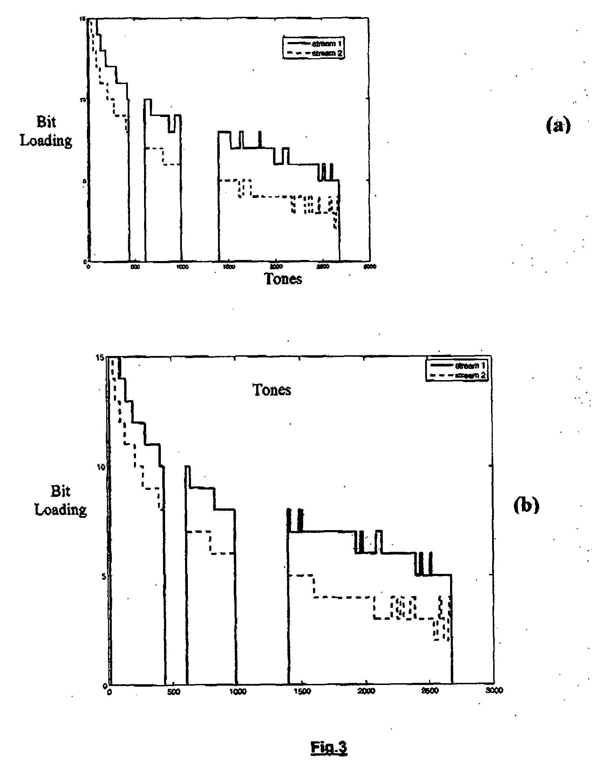

By exploiting the presence of an extra channel (the phantom mode), two other channels are aided. Simulations show a gain of up to 5% if the phantom mode is used to aid both differential modes. Alternatively, if the phantom mode is used to aid only one of the two differential modes, the rate increase for this differential mode is higher. The benefit the method of the invention brings, can be illustrated with the following example. A scenario is considered with two differential mode lines of 400m without and with additional phantom mode channel. A mask and alien crosstalkers are active at a power spectral density level of -60 dBm/Hz. Without phantom mode the aggregate bit rate over the two differential modes is 227 Mb/s. Then a phantom channel with 14.5 dBm power is introduced. The total bit rate now amounts to 233.5 Mb/s, i.e. an increase of about 3% . Fig.3 shows the corresponding bit loading on the differential modes in the downstream in case of (a) phantom mode transmission and (b) no phantom mode transmission.

Exploiting the phantom mode will increase the received signal power on the differential mode, independent of the received noise power. Consequently, in a high-noise environment where the available data rate is far less than those mentioned  above, the absolute gain in data rate will be the same, and the relative gain will be far greater. In the example of a 30 Mb/s DSL loop, and using the absolute bit rate gain of aforementioned simulation, exploitation of the phantom mode will result in a >20% data rate increase.

In an upstream scenario, as already mentioned, coordination is usually only possible at the receiver side. This scenario is referred to as the multiple access channel (MAC), whereby multiple transmitters send independent information to one central office (CO) or optical network unit (ONU), which then acts as a joint receiver. However, when at least two twisted pairs are available at a CPE, it is possible to benefit from the presence of phantom channel.

In upstream the same algorithms as described for the downstream case can be used However, no power allocation is performed. At the receiver at the DSLAM, a joint decoding algorithm can be performed. Joint decoding can be derived from channel estimation techniques as mentioned above or can use channel equalization techniques. Joint signal processing of the phantom mode and the two differential modes result in higher data rates. An algorithm exploiting the direct correlation between the differential signal(s) and the phantom mode signal can be used as well. In a specific upstream example no signal is sent on the phantom mode and no extra power is consumed. The phantom mode merely acts as a receiver of (crosstalk signals. Nevertheless, simulations show a higher gain in this case than in the downstream case where the phantom mode is used for transmission. More complex algorithms may be employed as well. The above described algorithm for broadcast-optimal spectrum balancing can here be used in its dual form for multiple access channel - optimal spectrum balancing (MAC-OSB), which was described in the paper 'Muitiple Access Channel Optimal Spectrum Balancing for Upstream DSL transmission' (Tsiaflakis et al., IEEE Communication Letters, vol.11, no.4, pp. 398-400, April 2007). The algorithm as described can readily be adapted for taking into account the phantom channel. The PM can be further used as an extra sensor for alien crosstalk cancellation in both directions.

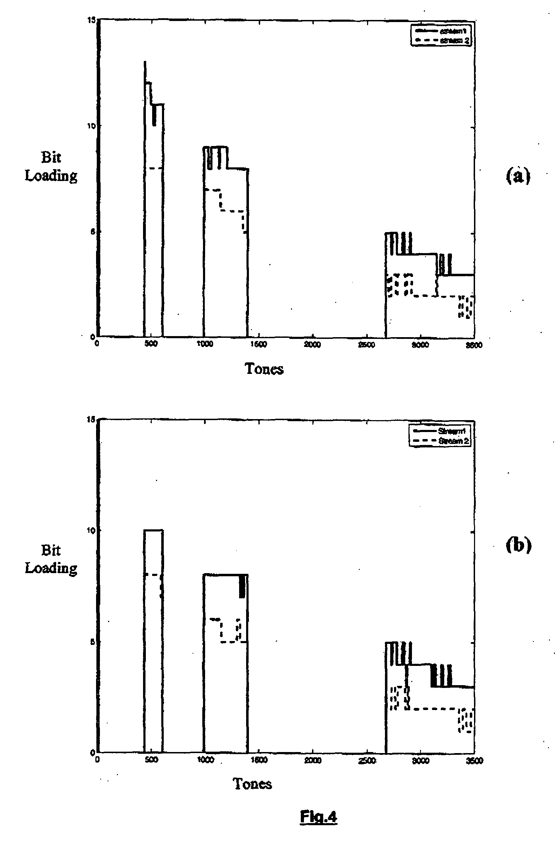

Fig. 4 illustrates the gain in bit loading obtained by applying the method of the invention. Again the case is considered of two differential mode lines of 400 m without and with additional phantom mode channel. A mask and alien crosstalkers are active at a power spectral density level of -60 dBm/Hz. Whereas the aggregate bit rate over the two differential modes is 109 Mb/s without phantom mode, it amounts to 116 Mb/s when additionally the presence of a phantom channel with 14.5 dBm power is exploited. Fig.4 illustrates the bit loading on the differential modes in the upstream in case of (a) phantom mode transmission and (b) no phantom mode transmission.

In case of mixed deployment, e.g. ADSL2+ and VDSL2, the VDSL2 can be aided by transmitting on the unused tones of the ADSL2+ line (also on the differential mode of the ADSL2+ line ).

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operate according to the present invention in other sequences, or in orientations different from the one(s) described or illustrated above.

## Claims

1. A method for digital subscriber line communication over first and second twisted pair cables, comprising the step of generating first and second differential signals for data communication over the first and second twisted pair cables respectively, wherein the method is **characterised in that** it comprises the further step of transmitting a third differential signal that comprises rotated versions in the frequency domain of the first and second differential signals over a phantom channel defined by the difference in common-mode voltage between the first and the second twisted pair cables in order to increase the signal to noise ratio of the first and second differential signals at a receiver.

2. The method according to claim 1, wherein the power available to the third differential signal is split between the two differential modes based on service profiles of end customers, where a larger fraction of the power is available to high-end customers.

3. The method according to claim 1, wherein the power available to the third differential signal is split between the two differential modes based on loop characteristics of the first and second twisted pair cables, where a larger fraction of the power is allocated to aid the differential signal having the strongest attenuation.

4. The method according to claim 1, wherein the power available to the third differential signal is split between the two differential modes based on the crosstalk amplitudes of the phantom channel into the first and second twisted pair cables, where frequency tones of the phantom channel having a higher crosstalk amplitude into the first twisted pair cable are allocated to aid the first differential signal, and where frequency tones of the phantom channel having a higher crosstalk amplitude into the second twisted pair cable are allocated to aid the second differential signal.

5. The method according to claim 1, wherein the transmitting step is preceded by a step of measuring the crosstalk between the phantom channel and the first and second twisted pair cables.

**6.** The method according to claim 1, wherein the first and second twisted pair cables belong to a quad cable.

**7.** A digital subscriber line access multiplexer comprising

- means for connecting to first and second twisted pair cables,
- means for generating first and second differential signals for data communication over the first and second twisted pair cables respectively,

wherein the digital subscriber line access multiplexer is **characterised in that** its further comprises means for creating a phantom channel defined by the difference in common-mode voltage between the first and second twisted pair cables, and means for transmitting a third differential signal that comprises rotated versions in the frequency domain of the first and second differential signals over the phantom channel in order to increase the signal to noise ratio of the first and second differential signals at a receiver.

**Patentansprüche**

**1.** Verfahren für digitale Teilnehmeranschluss-Kommunikation über eine erste und eine zweite verdrillte Zweidrahtleitung, umfassend den Schritt des Erzeugens eines ersten und eines zweiten differenziellen Signals für die Datenkommunikation über jeweils die erste und die zweite verdrillte Zweidrahtleitung, wobei das Verfahren **dadurch gekennzeichnet ist, dass** es den weiteren Schritt des Übertragens eines dritten differenziellen Signals, welches gedrehte Versionen im Frequenzbereich des ersten und des zweiten differenziellen Signals umfasst, über einen Phantomkanal, definiert durch die Differenz in der Gleichtaktspannung zwischen der ersten und der zweiten verdrillten Zweidrahtleitung, umfasst, um das Signal-Rausch-Verhältnis des ersten und des zweiten differenziellen Signals an einem Empfänger zu erhöhen.

**2.** Verfahren nach Anspruch 1, wobei die für das dritte differenzielle Signal verfügbare Leistung zwischen den zwei differenziellen Moden auf der Basis von Dienstprofilen der Endkunden aufgeteilt wird, wobei ein größer Bruchteil der Leistung für High-End-Kunden verfügbar ist.

**3.** Verfahren nach Anspruch 1, wobei die für das dritte differenzielle Signal verfügbare Leistung zwischen den zwei differenziellen Moden auf der Basis von Schleifeneigenschaften der ersten und der zweiten verdrillten Zweidrahtleitung aufgeteilt wird, wobei ein größerer Bruchteil der Leistung zugeteilt wird, um das differenzielle Signal mit der stärksten Abschwächung zu unterstützen.

**4.** Verfahren nach Anspruch 1, wobei die für das dritte differenzielle Signal verfügbare Leistung zwischen den zwei differenziellen Moden auf der Basis von Übersprechamplituden des Phantomkanals in der ersten und der zweiten verdrillten Zweidrahtleitung aufgeteilt wird, wobei Frequenztöne des Phantomkanals mit einer höheren Übersprechamplitude in der ersten verdrillten Zweidrahtleitung zugeteilt werden, um das erste differenzielle Signal zu unterstützen, und wobei Frequenztöne des Phantomkanals mit einer höheren Übersprechamplitude in der zweiten verdrillten Zweidrahtleitung zugeteilt werden, um das zweite differenzielle Signal zu unterstützen.

**5.** Verfahren nach Anspruch 1, wobei dem Schritt des Übertragens ein Schritt des Messens des Übersprechens zwischen dem Phantomkanal und der ersten und zweiten verdrillten Zweidrahtleitung vorausgeht.

**6.** Verfahren nach Anspruch 1, wobei die erste und die zweite verdrillte Zweidrahtleitung zu einem Viererkabel gehören.

**7.** Digitaler Teilnehmeranschluss-Zugangsmultiplexer, umfassend:

- Mittel für den Anschluss an die erste und die zweite verdrillte Zweidrahtleitung,
- Mittel zum Erzeugen eines ersten und eines zweiten differenziellen Signals für die Datenkommunikation über jeweils die erste und die zweite verdrillte Zweidrahtleitung,

wobei der digitale Teilnehmeranschluss-Zugangsmultiplexer **dadurch gekennzeichnet ist, dass** er weiterhin Mittel zum Herstellen eines Phantomkanals, definiert durch die Differenz in der Gleichtaktspannung zwischen der ersten und der zweiten verdrillten Zweidrahtleitung, und Mittel zum Übertragen eines dritten differenziellen Signals, welches gedrehte Versionen im Frequenzbereich des ersten und des zweiten differenziellen Signals umfasst, über einen Phantomkanal, um das Signal-Rausch-Verhältnis des ersten und des zweiten differenziellen Signals an einem Empfänger zu erhöhen, umfasst.

**Revendications**

1. Procédé de communication de ligne d'abonné numérique sur des premier et deuxième câbles à paire torsadée, comprenant l'étape de génération d'un premier et d'un deuxième signaux différentiels pour la communication de données sur le premier et le deuxième câbles à paire torsadée respectivement, dans lequel le procédé est **caractérisé en ce qu'**il comprend l'autre étape de transmission d'un troisième signal différentiel qui comprend des versions ayant subi une rotation dans le domaine fréquentiel des premier et deuxième signaux différentiels sur un canal fantôme défini par la différence de tension de mode commun entre les premier et deuxième câbles à paire torsadée afin d'augmenter le rapport signal sur bruit des premier et deuxième signaux différentiels au niveau d'un récepteur.

2. Procédé selon la revendication 1, dans lequel la puissance disponible pour le troisième signal différentiel est répartie entre les deux modes différentiels sur la base de profils de service de clients finaux, où une fraction supérieure de la puissance est disponible pour les clients haut de gamme.

3. Procédé selon la revendication 1, dans lequel la puissance disponible pour le troisième signal différentiel est répartie entre les deux modes différentiels sur la base de caractéristiques de boucle des premier et deuxième câbles à paire torsadée, où une fraction supérieure de la puissance est attribuée pour assister le signal différentiel ayant l'atténuation la plus forte.

4. Procédé selon la revendication 1, dans lequel la puissance disponible pour le troisième signal différentiel est répartie entre les deux modes différentiels sur la base des amplitudes de diaphonie du canal fantôme dans le premier et le deuxième câbles à paire torsadée, où des tonalités de fréquences du canal fantôme ayant une amplitude de diaphonie supérieure dans le premier câble à paire torsadée sont attribuées pour assister le premier signal différentiel, et où des tonalités de fréquences du canal fantôme ayant une amplitude de diaphonie supérieure dans le deuxième câble à paire torsadée sont attribuées pour assister le deuxième signal différentiel.

5. Procédé selon la revendication 1, dans lequel l'étape de transmission est précédée par une étape de mesure de la diaphonie entre le canal fantôme et les premier et deuxième câbles à paire torsadée.

6. Procédé selon la revendication 1, dans lequel les premier et deuxième câbles à paire torsadée appartiennent à un câble à quartes.

7. Multiplexeur d'accès de ligne d'abonné numérique comprenant

   - des moyens de connexion aux premier et deuxième câbles à paire torsadée,
   - des moyens de génération de premier et deuxième signaux différentiels pour la communication de données sur les premier et deuxième câbles à paire torsadée respectivement,

   dans lequel le multiplexeur d'accès de ligne d'abonné numérique est **caractérisé en ce qu'**il comprend en outre des moyens pour créer un canal fantôme défini par la différence de tension de mode commun entre le premier et le deuxième câbles à paire torsadée, et des moyens pour transmettre un troisième signal différentiel qui comprend des versions ayant subi une rotation dans le domaine de fréquences des premier et deuxième signaux différentiels sur le canal fantôme afin d'augmenter le rapport signal sur bruit des premier et deuxième signaux différentiels au niveau d'un récepteur.

<u>Fig.1</u>

**400m lines**

<u>Fig.2</u>

(a)

(b)

Fig.3

(a)

Fig.4

**EP 2 091 196 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1630968 A
- US 6507608 B
- US 2006268966 A1
- WO 2006120510 A1

**Non-patent literature cited in the description**

- **TSIAFLAKIS et al.** Muitiple Access Channel Optimal Spectrum Balancing for Upstream DSL transmission. *IEEE Communication Letters,* April 2007, vol. 11 (4), 398-400